# EUROPEAN PATENT SPECIFICATION

(11) **EP 1 062 875 B1**
(45) Date of publication and mention of the grant of the patent: **23.04.2003**
(21) Application number: 99202000.8
(22) Date of filing: 22.06.1999
(51) Int. Cl.: A23G 3/02, A23G 3/04

(54) **Device for making moulded confectionery products**
Vorrichtung zur Herstellung von geformtem Konfekt
Appareillage pour la production de la confiserie mouillée

(43) Date of publication of application: 27.12.2000
(73) Proprietor: SOCIETE DES PRODUITS NESTLE S.A., 1800 Vevey (CH)
(72) Inventor: Nelson, Roy B., York YO 3 19HP (GB); Nelson, David Howard, Wigginton, York YO32 2TW (GB)
(74) Representative: Borne, Patrice Daniel

(56) References cited:
- EP-A- 0 400 700
- DE-A- 4 019 916
- GB-A- 2 249 934
- US-A- 3 669 030
- US-A- 4 279 295

## Description

The present invention relates to a method for making sugar-based confections. The invention relates, more particularly to a method for making sugar-based confections having a solids content above 75 percent solids. The invention also relates to a device particularly suitable for manufacturing sugar-based confections according to the method of the invention.

Sugar-based confections are, for example, gums, jellies, high boils, low boils, fat and milk-based confectionery such as toffees, fondants, fudges and caramels. Gums and jellies are hydrocolloid-based confectionery. Selection of the hydrocolloid system enables considerable textural modifications. Examples of gums and jellies are: winegums, hard pastilles, soft and foamed gums, fruit leathers, lemon slices, Turkish delights, gummy bears, jelly babies, etc.

Traditionally, sugar-based confections are manufactured by preparing a medium-high-solid fluid mass of 60-80 TS (total solids) from a liquor or slurry of confectionery-based ingredients including sugar, optionally hydrocolloid, fat and milk solids, etc. and, then, depositing the mass into moulds, usually comprising starch powder. The liquor is prepared from a sugar syrup. The sugar syrup is prepared, for example, by metering the ingredients and mixing them to make a cold-mix slurry. The slurry is heated until the ingredients are fully dissolved. The slurry is cooked by open pan boiling, in a jet cooker, coil cooker, plate or tubular heat exchanger or cooker extruder. Depending on the cooking equipment, ingredients formulation, concentration at forming, the operation will vary.

Starch moulding is used to reduce the moisture content of the final product and to shape the product to its final configuration after the slurry has been cooked. The starch moulding technique includes: forming mould impressions in powdered starch, depositing the cooked mass or slurry into the moulds to form the confectionery products. Subsequently, the moulds are put aside and, generally, are introduced into a drying stove to achieve the desired moisture content. The drying time in the stove is, generally, up to several days depending on the product to be dried. The moisture content of the cooked mass is substantially higher than the content obtained for the final product; typically between 20 to 35 percent of moisture content, while the final moisture content is comprised between 10 to 20 percent. This technique of manufacturing is also commonly known as the Mogul system. This technique is the production method that has conventionally been used for the manufacturing of hydrocolloid-based confections with a high solids content; i.e., above 80 percent solid.

Starch moulding can also be used to form other sugar confectionery masses of high solids content, for instance, high boiled sugar masses, typically up to 5% moisture, sugar fondant masses, typically up to 10% moisture, or low boiled caramel, fudge and chew masses, typically up to 12% moisture.

GB 2 249 934 A relates to a method using the starch moulding technique.

The traditional starch moulding method, as briefly described above, is costly, time consuming due to storage needs, energy and labour consuming.

Another technique is known as the starchless moulding. Starchless moulding is sometimes used for making various types of confections. For example, hydrocolloid-based confections can be made with a solid content of less than 85 percent. High-boiled confections of higher solid content are also achievable. In this method, the cooked mass has the same solid content as the final shaped product. The confection mass is deposited into series of teflon-coated moulds or flexible silicone rubber or metallic moulds sprayed with a releasing agent. Specific ejecting means are usually necessary, to ensure demoulding of the shaped masses. The moulds are, then, usually passed through a cooling tunnel. A wide range of confections may be produced by this method such as, for example, soft winegums, jelly bears, high-boils, low boils, caramels, fondants, fudges, etc.

The starchless moulding method has a scope of applications limited to confections containing a restricted variety of hydrocolloids having quick-setting properties, such as pectin, so as to allow demoulding with the rapid cooling possible in metal moulds. The method is less applicable for a large majority of hydrocolloids, such as gelatine and starch which are slow to set, when used as a single hydrocolloid. It is also difficult to cleanly deposit into the moulds due to the high viscosity of these low moisture hydrocolloid liquors. Demoulding can also be a problem unless sufficient release agent is used. The choice of the type of moulds is also critical. Generally, relatively flexible moulds are necessary as they facilitate the release of the shaped mass.

In addition, the starchless moulding method is suitable for the production of hydrocolloid-based confections having a relatively low solids content.

The object of the present invention is to propose a method of making sugar-based confections that solves the aforementioned drawbacks of the known methods. In particular, one of the objects of the invention is to give the possibility to produce a wide range of sugar-based confections at a suitable solids content which can be more easily moulded. Another object of the present invention is to propose a method of making sugar-based confections from a wide range of hydrocolloids with no particular setting problems. Another object of the invention is to propose a method of making confections in a wide range of solids content. Another object of the invention is to produce sugar-based confections, especially hydrocolloid-sugar confections, in a cleaner and economical manner, at the same time saving energy and labour time. Another object of the invention is to handle the extreme viscosities that can arise during cooking time, which usually leads to flowing and blocking problems.

Additional advantages of the present invention may also be noted such as the opportunity to apply a wide range of recipes. For example, medicated sweet can be produced without the threat of contamination from recycled starch as in the traditional starch moulding method.

For that, the present invention relates to a method for making sugar-based confections comprising
(a) dissolving gently confectionery ingredients to make a confectionery-based slurry,
(b) concentrating the confectionery-based slurry by applying the slurry onto a first hot surface having a first temperature and scraping below the final solids required, then moving the slurry onto a second hot surface having a second temperature and scraping the concentrated mass until the desired solid content level has been achieved.

Therefore, instead of applying a single cooking phase to the slurry, the method proposes to split the cooking cycle into separated heating phases which permit to achieve the preparation of confections with the desired solid content and eliminate the problems generally due to extreme viscosity increase that occurs when the starches are cooked to final total solids in a single cooking stage. In particular, the method permits a large choice of moulding and depositing techniques and starch moulding method is no longer required. The elimination of the starch handling equipment reduces capital asset, costly storage capacity and provides cleaner dust free production.

In a preferred embodiment, during concentrating, the second temperature of the second hot surface is higher than the first temperature of the first hot surface.

Phase (a) is a preparing step necessary to dissolve the ingredients, i.e., sugar and gum together. This phase may include a heating step where the sugar and gum are dissolved gently together. In an alternative, the dissolution is made in relatively cold conditions.

Phase (b) permits to gradually control the solid content of the confectionery mass and activate by hydration the gelling agent, before moulding is applied. Gentle wipe pre-cooking is carried out in a first phase before reaching the final solid content. In this first phase, about at least 65 percent, preferably 75 percent of completion of the moisture boil-off is achieved. The final concentration is obtained in a second phase that takes the slurry to the cooking temperature to reach the final boil off for the required solid phase content.

Preferably, phase (b) comprises evacuating the excess of moisture by applying a vacuum pressure. Vacuum helps water be removed, i.e., moisture be vented away and exhausted to atmosphere. It results that residence time can be advantageously shortened, temperature can be more precisely controlled and sugar inversion can be reduced. Sugar inversion is generally known as a reaction which causes the breakdown of an ose into two simpler sugars. Inversion may not be desired as it may modify the final features desired for the confectionery. Vacuum also minimises hydrocolloids breakdown.

The final result is that there is no absolute need to apply starch powder during the subsequent moulding stage, as the confectionery mass is able to set at relatively low temperature at the desired solid content. This also reduces all stoves and storage areas and also simplifies sugar sanding. The invention permits to reduce or, even in some cases, to eliminate the use of starch moulding. When starch moulding is still used, a significant reduction of stoving cycle time can be obtained. The problems usually met with single phase cooking are also solved accordingly, such as those linked to the extreme viscosity increase when the starches are cooked to final total solids.

In a preferred embodiment, (b) comprises applying variable shearing during scraping and wiping operations. This variation positively affects the rate of heat exchange and turbulence of the slurry mass and so permits to more rapidly reach the desired degree of moisture evaporation.

In a preferred embodiment, (b) comprises concentrating the slurry by evenly distributing the slurry on the first hot surface at temperatures comprised between 90 to 110°C while applying scraping and wiping, then, moving the slurry on the second hot surface at temperature comprised between 100 to 120°C so as to reach a final solids content of at least 75 percent by weight, preferably at least 80 percent by weight. It must be noted that the temperature ranges depend greatly on the recipe, the desired solid content and pressure.

According to the method of the invention, (a) comprises heating the slurry to a maximum temperature of 105 °C. Gentle heating is important to obtain a good dissolution of the hydrocolloids in the liquid medium, while avoiding starch to gelatinise during that operation or avoiding heat-sensitive agents to degrade.

It is also preferable, in particular for starch-containing confection, that the method further includes an operation of hydration and precooking of the slurry under high pressure before concentrating the slurry in (b). For that, the precooking comprises injecting direct steam in a short time so as to raise a temperature of at least 120 °C under a pressure ranging from 2 to 5 bars. Pressure and temperature levels are so adapted to sufficiently moisten the starch and cause the starch granules to and gelatinise.

In a particular embodiment of the invention, (b) comprises adding an additional amount of hydrocolloid. For example, the addition of hydrocolloid can be carried out between two levels of evaporation. In an alternative, the addition of hydrocolloid can be carried out between the pre-cooking and the evaporation operations. Preferably, gelatine is added, as there is no need to have gelatine undergoing a precooking stage when mixed with other hydrocolloids. Addition of gelatine at this later stage also solves some of the degradation problems of gelatine usually encountered in traditional cooking methods.

In a preferred embodiment, (b) consists of concentrating the sugar-hydrocolloid mass to an extent of at least 75 percent, preferably between 85 and 90 percent of solids. Indeed, it has been found out according to one aspect of the invention that the method was particularly suitable for making sugar-based products capable of being shaped by any moulding technique (casting, depositing, injection, layering, extrusion,...) that traditionally were only shaped in starch powdered moulds.

In another preferred embodiment the process includes the subsequent step of forming the sugar-based mass into a plurality of individual confections by passing it through a set of chilled forming rollers. It is a major advantage of the method of the invention to allow a quick shaping of the confections as opposed to the lengthy starch powdered moulding technique.

The invention also provides a device for carrying out the method previously described. The device comprises an evaporating apparatus comprising:
an internal evaporation housing;
feeding means which provide the slurry inside the evaporation housing;
wherein the internal evaporation housing is divided into at least two evaporation portions, an upper evaporation portion and a lower evaporation portion, each one having their own specific shape and/or heating characteristics and, each one comprising a set of distinct scraping elements.

Such a unique arrangement permits to adapt the evaporating conditions, i.e., particularly the heating and mechanical conditions, to the gradual change in viscosity of the confectionery mass through the apparatus so as both to prevent blocking problems and achieve a desired level of concentration of the final slurry. For that, the evaporating apparatus provides a sequential evaporating process on the slurry to reach the desired solids content in at least two separated stages without breaking down the gelling potential of the recipe.

In a preferred embodiment, the upper evaporation portion is regulated at a temperature range that is lower than the temperature range of the lower evaporation portion. Therefore, the slurry can experience a first gentler heating phase which evacuates the excess of moisture to atmosphere in the first evaporation portion, then a second stronger heating phase carried out in the second evaporation portion so as to reach the desired solid content.

Preferably, means for applying a vacuum pressure within the internal evaporation housing are provided so as to promote more rapidly the exhaustion of the moisture of the evaporating apparatus into the atmosphere. Vacuum also permits to reduce the residence times in the evaporating apparatus. It also prevents sugar inversion and minimises hydrocolloids breakdown when hydrocolloids are present in the slurry while taking into account the increase of viscosity.

In a more preferable embodiment, the two evaporation portions are separated by an intermediate portion having a substantially tapered configuration connecting the upper evaporation portion to the lower evaporation portion. The intermediate portion has the function of providing a transition ramp for moving the slurry to the final evaporation portion. It is also a privileged site for adding new heat-sensitive ingredients and for control temperature measurement.

In a specific arrangement of the invention, the upper evaporation portion and the lower evaporation portion have both substantially cylindrical configurations, the lower evaporation portion having diameter less than the diameter of the upper portion. This reduction of size at the lower part of the evaporation apparatus allows a more continuous and effective scraping in limiting the torque generated on the centre-driven scraping elements by the product as the product becomes progressively thicker.

In another preferred embodiment, the evaporator apparatus further comprises a fourth lowermost portion directly adjacent to the lower evaporation portion, which has a tapered configuration; said lower portion comprising a helicoidal rotary member acting to exit the concentrated mass out of the evaporator. Such an arrangement at the end of the evaporator participates to the continuous transfer of the product toward the moulding device and reduces the problems of blocking of the concentrated mass in the lower part of the evaporator due to a higher viscosity. More preferably, the helicoidal rotary member is a spiral ribbon auger. In addition, a withdrawal pump can advantageously be added at the evaporator's exit.

The device of the invention further comprises:
a plate heat exchanger in which the cold mix slurry is fed to be gently heated to a maximum temperature of 105 °C;
a jet cooker in which the hot slurry is cooked at a pressure up to 5 bars at a temperature up to 150 °C.

In both the plate exchanger and the jet cooker, the slurry, depending upon its boiling point, is usually treated under a pressure higher than atmospheric pressure to be able to reach the desired temperature levels and consequently, minimise the cycle times.

The device also comprises preferably a moulding device having a set of moulding rollers in which the hydrocolloid mass is shaped in a plurality of individual confectionery products and cooling means located downstream from the moulding rollers.

Preferably, the cooling means have a cooling tunnel under which is sprayed a coolant which can be a liquid such as brine or a liquid gas such as nitrogen.

The device of the invention can also comprise a mixer for colouring and/or flavouring the hydrocolloid mass located between the evaporating apparatus and the moulding means.

The advantages and specific features of this invention will become apparent from the following detailed description, which, taken in conjunction with the drawings, discloses preferred embodiments of the present invention.

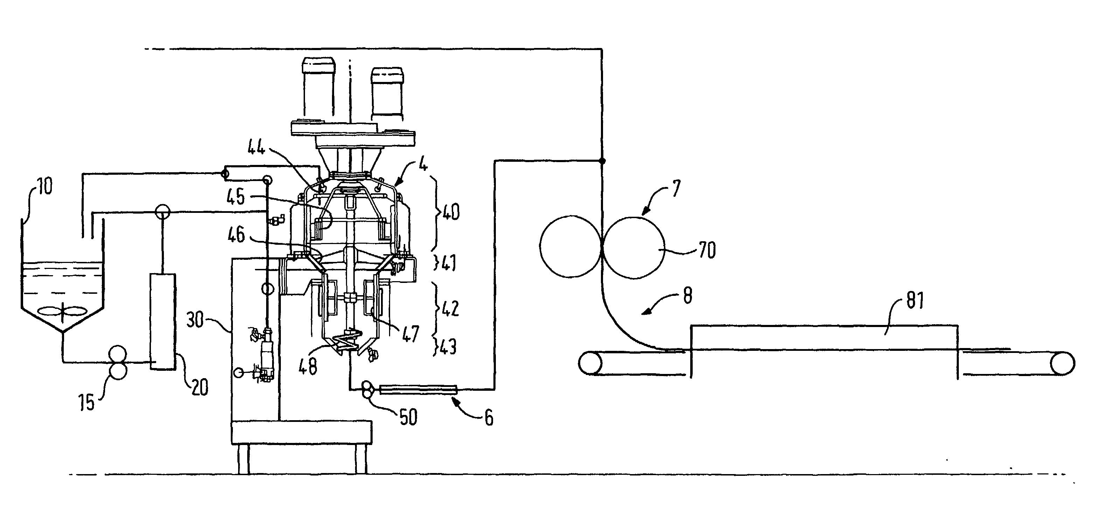

The figure is a schematic illustration of the installation for carrying out the method of the invention.

Regarding the installation for carrying out the method of the invention illustrated in the figure attached, a quantity of ingredients including, water, carbohydrates (or sugars) and hydrocolloids (or gums) is delivered in a storage hopper 10.

In the context of the present invention, sugars encompass the following non-exhaustive group of: sucrose, fructose, glucose, dextrose, lactose, and derivative oses, starch hydrolysate syrups and maltodextrins, carbohydrate alcohols such as sorbitol, xylitol, etc. Sugars can be supplied under any appropriate form such as granulates, nibs, caster, icing, liquid, molasses, etc.

In the present context of the invention, the hydrocolloids encompass the following non exhaustive group of: starch, pectin, agar agar (agarose), gelatine, gum arabic, xanthan gum, gellan gum, carrageenan, derivative and modified starches, etc.

Other various ingredients can also be added, if necessary, such as non-hydrocolloid gelling agents, oils, food-acceptable acids such as citric acids, malic acid, tartaric acid etc.

The ingredients may be added in a cold or alternatively, in a preheated state to favour the dissolution. The storage hopper includes mixing means to provide a substantially liquid medium of mix slurry or syrup.

In a first operation, the mix slurry is transported to a pre-heating apparatus; e.g., a plate heat exchanger 20 by means of a pump 15. The mix slurry undergoes a gradual heating phase to reach a temperature sufficient to have the soluble ingredients, in particularly sugar, completely dissolved in the slurry. In general, the temperature is about 90 °C during 60 seconds. The temperature must not exceed 105 °C, preferably 100 °C, under slight pressure above atmospheric pressure to prevent gelatinisation to occur at an early step of the process.

From the pre-heating device, the slurry is delivered through a jet cooker 30 where direct steam is injected to the slurry to undergo a pre-cooking phase under pressure ranging from 2 to 5 bars at temperature of 110 to 150 °C during 5-10 seconds. This operation is important to cause the starch granules to properly gelatinise by hydration.

A marginal amount of the slurry, at the preheating phase or at the jet-cooking phase, is redistributed into the mixing hopper so as to facilitate the dissolution of the solid ingredients put into the hopper to make the mix slurry.

Then, the precooked slurry is delivered under pressure to the specific scrape evaporator 4 of the invention, which is arranged to provide a controlled and gradually produced solid concentration of the final mass before moulding. The pressurised slurry jet spray feeds into an internal evaporation housing comprising a first upper cooking portion 40. The slurry is provided through a nozzle arrangement 44 properly oriented, to be directly deposited on the inner surface of the portion 40. For example, the nozzle arrangement comprises a plurality of nozzles, each one aimed at inner walls of the upper portion in different directions so as to form a film of slurry evenly distributed on the surface of the portion. The first upper portion has a substantially cylindrical shape and a relatively large diameter so as to afford a large evaporation area. The moisture excess is evacuated to atmosphere at the top of the dome-shaped upper end of the evaporator. The inner surfaces of the first upper portion are scraped and wiped by independent wipers 45 whose dimensions, i.e., length and radius, are properly adapted to the size of the portion. The wipers in the apparatus are all mounted and secured to a central shaft arrangement which extends along the height of the evaporating housing. The central shaft arrangement is driven by motors located at the top of the evaporating housing.

The slurry continues downwards into an intermediate portion 41 having a substantially conical configuration which permits to the slurry film to flow on the surface of the lower stage of the evaporator. The slope of the portion advantageously permits to slow down the slurry film. The intermediate portion also has a set of scrapers or wipers adapted to its geometry and size. There is no need to apply cooking at this level. Temperature of the passing liquor can simply be monitored. At this point, the majority of the moisture boil off will have occurred. If needed, additional amount of temperature-sensitive hydrocolloids, colouring or flavouring agents or additives can be, advantageously added at this stage. For example, gelatine can advantageously be added.

The slurry passes down to the last stage of cooking in the lower substantially cylindrical portion 42, which comprises a properly adapted set of scrapers 47. The diameter of the lower evaporation portion 42 is substantially lower than the diameter of the first upper portion 40. During this stage, the more viscous slurry is further heated to a higher temperature and centrifugally scraped in accordance with the correct shearing rate required for higher viscosity without breaking the gel structure, which has been slowly formed during the previous cycle. Boil off of moisture to final solids occurs in this final cooking portion. Pressure conditions can also be applied. In particular, it is preferable that a vacuum is drawn within the evaporator if heat-sensitive hydrocolloids are used. Steam, corresponding to the excess of water to be evaporated, rises upward during the cooking process to be exhausted to atmosphere at the top of the cooker dome. Thermocouplers are preferably provided at regular intervals along the evaporator, in particular, at each distinct portion to permit an accurate control and regulation of temperature. Gelatine can also be added to the slurry at this stage.

The lowermost portion 43 of the evaporator has a tapered configuration in which a helicoidal rotary means 48 is installed to drive and assist the viscous mass down to the exit of the evaporator. Such a helicoidal rotary means is, preferably, a spiral ribbon auger. If needed, further whipping and scraping operations may be necessary by additional scrapers (not illustrated) positioned below the auger to prevent the concentrated slurry to stick at the outlet of the evaporating apparatus.

During the concentration operation within the evaporating apparatus, the shearing rate applied on the confectionery mass can be varied depending upon the recipes. A variable shearing rate can be obtained by varying the speed of rotation of the scraping elements in the evaporating apparatus during the concentration process. In addition, The scraping elements of the different portions can be run at the same speed or, alternatively, at different speeds with respect to each other. In general, the speed is adjusted to obtain shear rates in each portion of the evaporator adapted to give the best conditions for each particular recipe so to enable to handle a wide range of viscosity.

Located at the exit of the evaporator is a withdrawal pump 50 that continuously feeds the viscous mass into an inline mixing device 6. The pump may also provide a vacuum seal should evaporating under vacuum be desired. The mixing device 6 allows colouring and/or flavouring agents to be added to the viscous mass before moulding operation occurs.

The next step is the transport of the viscous mass to the forming device 7. Preferably, the forming device consists of a set of chilled rollers 70 comprising series of die sections, which provides the final shape to the confectionery products. Of course, the forming device could differ from rollers without departing from the scope of the invention. For example, die plates could replace the rollers. In another alternative, the moulding device could comprise a combination of a depositor and a series of moulds. The confections are substantially cooled during forming while passing through the chilled rollers. The confectionery products can be formed as individually moulded products. In an alternative, the confectionery products can be extruded as a continuous rope, film or sheet of confections.

After forming, the confections, as shaped, may be further cooled by cooling conveyor means. Preferably, the cooling means 8 includes liquid gas spraying, such as nitrogen, directly on the conveyor means. Air-cooling can also be envisioned depending upon the ingredients, setting conditions, flow capacity, etc. Additional cooling means are generally required such as a passing through a cooling tunnel 81 in which liquid gas is sprayed, especially, nitrogen. It is very surprising to see that the gel set occurs at the low temperature forming device giving the solution, for a majority of hydrocolloids, to the stand up properties as desired. In particular, the method eliminates all the stoves and storage areas generally present in mogul plants.

The invention is not limited to the embodiments and examples hereinbefore described which may vary in both construction and details.

## Claims

1. A device for producing a mouldable confectionery-based product, comprising a scrape evaporating apparatus (4) comprising:
an internal evaporation housing,
feeding means (44) which provide the slurry inside the evaporation housing, wherein
the internal evaporation housing is divided into at least two evaporation portions, an upper evaporation portion (40) and a lower evaporation portion (42), each portion having their own specific shape and/or heating characteristics and, each one comprising a set of distinct scraping elements (45, 47).

2. A device according to claim 1, wherein the upper evaporation portion (40) is regulated at a temperature range that is lower than the temperature range of the lower evaporation portion (42).

3. A device according to claim 2, wherein the upper evaporation portion (42) is regulated at a temperature range of 90 to 110°C, preferably 95 to 105°C, whereas the lower evaporation portion (42) is regulated to a temperature range of 100 to 120°C, preferably 105 to 115°C.

4. A device according to any of claims 1 to 3, wherein the two evaporation portions (40, 42) are separated by an intermediate portion (41) having a substantially tapered configuration connecting the upper evaporation portion (40) to the lower evaporation portion (42).

5. Device according to claim 4, wherein the upper evaporation portion (40) and the lower evaporation portion (42) have both substantially cylindrical configuration, the lower evaporation portion (42) having a diameter less than the diameter of the upper portion (40).

6. Device according to any of the preceding claims, wherein it further comprises means for applying a vacuum pressure within the internal evaporation housing.

7. Device according to any of claims 1 to 6, wherein the feeding means (44) comprise a jet spray feeding device aimed at the inner walls of the upper evaporation portion (40).

8. Device according to any of claims 1 to 7 , wherein the evaporator apparatus further comprises a fourth lowermost portion (43) directly adjacent to the lower evaporation portion (42), which has a tapered configuration; said lowermost (43) portion comprising a helicoidal rotary member (48) acting to exit the concentrated mass out of the evaporator.

9. Device according to claim 8, wherein the helicoidal rotary member (48) is a spiral ribbon auger.

10. Device according to any of claims 1 to 9, wherein it further comprises a plate heat exchanger (20), located upstream the evaporating apparatus, in which the cold mix slurry is fed to be gently heated to a maximum temperature of 105 °C.

11. Device according to any of claim 10, wherein it further comprises a jet cooker (30) located between the plate heat exchanger (20) and the scrape evaporating apparatus in which the hot slurry is cooked at a pressure up to 5 bars at a temperature up to 150 °C.

12. Device according to any of claims 1 to 11, wherein it further comprises a moulding device having a set of moulding rollers (70) in which the concentrated mass is shaped in a plurality of individual confectionery products and cooling means (8) located downstream from the moulding rollers (70).

13. Device according to any of claims 1 to 11, wherein it further comprises a depositing apparatus for depositing the concentrated mass in a plurality of moulds.

14. Device according to claim 12 or 13, wherein, the cooling means (8) has a cooling tunnel (81) under which is sprayed a coolant such as a liquid or a liquid gas.

15. Device according to any of claims 12 to 14, wherein it further comprises a mixer (6) for colouring and/or flavouring the hydrocolloid mass located between the evaporating apparatus (4) and the moulding means.

16. An evaporating apparatus (4) for concentrating a confectionery-based mass comprising:
an internal evaporation housing,
feeding means (44) which provide the confectionery-based mass inside the evaporation housing, wherein
the internal evaporation housing is divided into at least two evaporation portions, an upper evaporation portion (40) and a lower evaporation portion (42), each portion having their own specific shape and/or heating characteristics and, each one comprising a set of distinct scraping elements (45, 47).

17. Apparatus according to claim 16, wherein the upper evaporation portion (40) is regulated at a temperature range that is lower than the temperature range of the lower evaporation portion (42).

## Patentansprüche

1. Vorrichtung zum Erzeugen eines formbaren Produkts auf Konfektbasis, die ein Schab- und Einkochvorrichtung (4) mit
einem inneren Einkochgehäuse, und
einer Zuführvorrichtung (44) umfaßt, die den Brei in das Einkochgehäuse schafft, wobei
das innere Einkochgehäuse in zumindest zwei Einkochabschnitte unterteilt ist, einen oberen Einkochabschnitt (40) und einen unteren Einkochabschnitt (42), wobei jeder Abschnitt seine eigene spezielle Form und/oder Heizcharakteristiken aufweist, und jeder einen Satz eigener Schabelemente (45, 47) aufweist.

2. Vorrichtung nach Anspruch 1, bei der der obere Einkochabschnitt (40) auf einen Temperaturbereich geregelt wird, der niedriger als der Temperaturbereich des unteren Einkochabschnitts (42) ist.

3. Vorrichtung nach Anspruch 2, bei der der obere Einkochabschnitt (42) auf einen Temperaturbereich von 90 bis 110°C, vorzugsweise von 95 bis 105°C geregelt wird, wohingegen der untere Einkochabschnitt (42) auf einen Temperaturbereich von 100 bis 120°C, vorzugsweise von 105 bis 115°C geregelt wird.

4. Vorrichtung nach einem der Ansprüche 1 bis 3, bei der die zwei Einkochabschnitte (40, 42) durch einen Zwischenabschnitt (41) mit einem im wesentlichen konischen Aufbau getrennt sind, der den oberen Einkochabschnitt (40) mit dem unteren Einkochabschnitt (42) verbindet.

5. Vorrichtung nach Anspruch 4, bei der der obere Einkochabschnitt (40) und der untere Einkochabschnitt (42) beide eine im wesentlichen zylindrischen Aufbau aufweisen, wobei der untere Einkochabschnitt (42) einen Durchmesser aufweist, der kleiner als der Durchmesser des oberen Abschnitts (40) ist.

6. Vorrichtung nach einem der vorhergehenden Ansprüche, die des weiteren eine Vorrichtung zum Anlegen eines Vakuumdrucks in dem inneren Einkochgehäuse aufweist.

7. Vorrichtung nach einem der Ansprüche 1 bis 6, bei der die Zufuhrvorrichtung (44) eine Strahl-Spray-Zuführvorrichtung umfaßt, die auf die Innenwände des oberen Einkochabschnitts (40) zielt.

8. Vorrichtung nach einem der Ansprüche 1 bis 7, bei der die Einkochvorrichtung des weiteren einen vierten untersten Abschnitt (43) aufweist, der unmittelbar benachbart zu dem unteren Einkochabschnitt (42) liegt und einen konischen Aufbau hat, wobei der unterste Abschnitt (43) ein schraubenförmiges Drehglied (48) aufweist, das arbeitet, um die konzentrierte Masse aus dem Einkocher auszustoßen.

9. Vorrichtung nach Anspruch 8, bei der das schraubenförmige Drehglied (48) eine Spiralbandschnecke ist.

10. Vorrichtung nach einem der Ansprüche 1 bis 9, bei der sie des weiteren einen Plattenwärmetauscher (20) aufweist, der stromab der Einkochvorrichtung angeordnet ist, in der der kaltgemischte Brei zugeführt wird, um vorsichtig auf eine maximale Temperatur von 105°C erwärmt zu werden.

11. Vorrichtung nach Anspruch 10, bei der sie des weiteren einen Gebläsekocher (30) aufweist, der zwischen dem Plattenwärmetauscher (20) und der Schab- und Einkochvorrichtung angeordnet ist, in der der heiße Brei bei einem Druck von bis zu 5 Bar und einer Temperatur von bis zu 150°C gekocht wird.

12. Vorrichtung nach einem der Ansprüche 1 bis 11, bei der sie des weiteren eine Formvorrichtung mit einem Satz Formwalzen (70) aufweist, in denen die konzentrierte Masse in eine Vielzahl einzelner Konfektprodukte geformt wird, und eine Kühlvorrichtung (8) aufweist, die stromab von den Formwalzen (70) angeordnet ist.

13. Vorrichtung nach einem der Ansprüche 1 bis 11, bei der sie des weiteren eine Abscheidevorrichtung zum Abscheiden der konzentrierten Masse in eine Vielzahl von Formen aufweist.

14. Vorrichtung nach Anspruch 12 oder 13, bei der die Kühlvorrichtung (8) einen Kühltunnel (81) aufweist, unter dem ein Kühlmittel gesprüht wird, wie zum Beispiel eine Flüssigkeit oder ein flüssiges Gas.

15. Vorrichtung nach einem der Ansprüche 12 bis 14, bei der sie des weiteren einen Mixer (6) zum Färben und/oder Aromatisieren der Hydrokolloidmasse aufweist, der zwischen der Einkochvorrichtung (4) und der Formvorrichtung angeordnet ist.

16. Einkochvorrichtung (4) zum Konzentrieren einer Masse auf Konfektbasis mit:
einem inneren Einkochgehäuse, und
einer Zuführvorrichtung (44), die die Masse auf Konfektbasis in das Einkochgehäuse schafft, wobei
das innere Einkochgehäuse in zumindest zwei Einkochabschnitte unterteilt ist, einen oberen Einkochabschnitt (40) und einen unteren Einkochabschnitt (42), wobei jeder Abschnitt seine eigene spezielle Form und/oder Heizcharakteristiken aufweist, und jeder einen Satz eigener Schabelemente (45, 47) aufweist.

17. Vorrichtung nach Anspruch 16, bei der der obere Einkochabschnitt (40) auf einen Temperaturbereich geregelt wird, der niedriger als der Temperaturbereich des unteren Einkochabschnitts (42) ist.

## Revendications

1. Dispositif pour fabriquer un produit moulable à base de confiseries, comprenant un appareil d'évaporation à raclage (4) comprenant :
une enceinte d'évaporation interne ;
un moyen de distribution (44) qui distribue la pâte dans l'enceinte d'évaporation ;
dans lequel l'enceinte d'évaporation interne est divisée en au moins deux parties d'évaporation, une partie d'évaporation supérieure (40) et une partie d'évaporation inférieure (42), chaque partie ayant sa forme et/ou ses caractéristiques de chauffage spécifiques propres et chacune comprenant un ensemble d'éléments de raclage distincts (45, 47).

2. Dispositif selon la revendication 1, dans lequel la partie d'évaporation supérieure (40) est réglée dans une plage de températures qui est inférieure à la plage de températures de la partie d'évaporation inférieure (42).

3. Dispositif selon la revendication 2, dans lequel la partie d'évaporation supérieure (40) est réglée dans une plage de températures de 90 à 110°C, de préférence de 95 à 105°C, tandis que la partie d'évaporation inférieure (42) est réglée dans une plage de températures de 100 à 120°C, de préférence de 105 à 115°C.

4. Dispositif selon l'une quelconque des revendications 1 à 3, dans lequel les deux parties d'évaporation (40, 42) sont séparées par une partie intermédiaire (41) ayant une configuration sensiblement conique reliant la partie d'évaporation supérieure (40) à la partie d'évaporation inférieure (42).

5. Dispositif selon la revendication 4, dans lequel la partie d'évaporation supérieure (40) et la partie d'évaporation inférieure (42) ont toutes deux une configuration cylindrique, la partie d'évaporation inférieure (42) ayant un diamètre inférieur au diamètre de la partie supérieure (40).

6. Dispositif selon l'une quelconque des revendications précédentes, comprenant également un moyen pour appliquer une dépression au sein de l'enceinte d'évaporation interne.

7. Dispositif selon l'une quelconque des revendications 1 à 6, dans lequel le moyen de distribution (44) comprend un dispositif de distribution à buses orienté vers les parois internes de la partie d'évaporation supérieure (40).

8. Dispositif selon l'une quelconque des revendications 1 à 7, dans lequel l'appareil d'évaporation comprend également une quatrième partie (43), située le plus bas, directement adjacente à la partie d'évaporation inférieure (42), qui a une configuration conique, ladite partie la plus basse (43) comprenant un élément rotatif hélicoïdal (48) faisant sortir la masse concentrée de l'appareil d'évaporation.

9. Dispositif selon la revendication 8, dans lequel l'élément rotatif hélicoïdal (48) est une vis-ruban extrudeuse en spirale.

10. Dispositif selon l'une quelconque des revendications 1 à 9, comprenant également un échangeur de chaleur à plaques (20), situé en amont de l'appareil d'évaporation, dans lequel la pâte composée froide est distribuée pour être doucement chauffée jusqu'à une température maximale de 105°C.

11. Dispositif selon la revendication 10, comprenant également un cuiseur à jets (30) situé entre l'échangeur de chaleur à plaques (20) et l'appareil d'évaporation à raclage dans lequel la pâte chaude est cuite à une pression jusqu'à 5 bars à une température jusqu'à 150°C.

12. Dispositif selon l'une quelconque des revendications 1 à 11, comprenant également un jeu de rouleaux de moulage (70) dans lequel la masse concentrée est façonnée en une pluralité de produits de confiserie individuels et un moyen de refroidissement (8) situé en aval des rouleaux de moulage (70).

13. Dispositif selon l'une quelconque des revendications 1 à 11, comprenant également un appareil de dépôt pour déposer la masse concentrée dans une pluralité de moules.

14. Dispositif selon la revendication 12 ou 13, dans lequel le moyen de refroidissement (8) comprend un tunnel de refroidissement (81) sous lequel est pulvérisé un agent de refroidissement tel qu'un liquide ou un gaz liquide.

15. Dispositif selon l'une quelconque des revendications 12 à 14, comprenant également un mélangeur (6) pour colorer et/ou aromatiser la masse d'hydrocolloïdes située entre l'appareil d'évaporation (4) et le moyen de moulage.

16. Appareil d'évaporation (4) pour concentrer une masse à base de confiseries comprenant :
une enceinte d'évaporation interne ;
un moyen de distribution (44) qui distribue la masse à base de confiseries dans l'enceinte d'évaporation ;
dans lequel l'enceinte d'évaporation interne est divisée en au moins deux parties d'évaporation, une partie d'évaporation supérieure (40) et une partie d'évaporation inférieure (42), chaque partie ayant sa forme et/ou ses caractéristiques de chauffage spécifiques, propres, et chacune comprenant un ensemble d'éléments de raclage distincts (45, 47).

17. Appareil selon la revendication 16, dans lequel la partie d'évaporation supérieure (40) est réglée dans une plage de températures qui est inférieure à la plage de températures de la partie d'évaporation inférieure (42).
